(19) Europäisches Patentamt
European Patent Office
Office européen des brevets

(11) Veröffentlichungsnummer: **0 352 578**
**A2**

(12) **EUROPÄISCHE PATENTANMELDUNG**

(21) Anmeldenummer: **89113021.3**

(51) Int. Cl.⁴: **B05D 7/24**

(22) Anmeldetag: **15.07.89**

(30) Priorität: **23.07.88 DE 3825066**

(43) Veröffentlichungstag der Anmeldung:
**31.01.90 Patentblatt 90/05**

(84) Benannte Vertragsstaaten:
**AT BE CH DE ES FR GB IT LI NL SE**

(71) Anmelder: **Röhm GmbH**
**Kirschenallee Postfach 4242**
**D-6100 Darmstadt 1(DE)**

(72) Erfinder: **Omeis, Jürgen, Dr.**
**Barkhausstr. 65**
**D-6100 Darmstadt(DE)**
Erfinder: **Rau, Norbert, Dr.**
**Hohe Mark Weg 4**
**D-6231 Sulzbach(DE)**
Erfinder: **Kunesch, Michael**
**Kleestädter Strasse 30**
**D-6113 Babenhausen(DE)**

(54) **Verfahren zur Herstellung von dünnen anisotropen Schichten auf oberflächen-strukturierten Trägern.**

(57) Die Erfindung betrifft ein Verfahren zur Herstellung von dünnen, anisotropen Schichten gebildet aus flüssigkristallinen Substanzen, wobei die flüssigkristallinen Substanzen FKS in dünner Schicht einseitig auf einem Träger T, mit in der Weise vorstrukturierter Oberfläche, daß eine die Ausrichtung bestimmende Vorzugsrichtung der Struktur gegeben ist, aufgebracht werden.

EP 0 352 578 A2

Xerox Copy Centre

## Gebiet der Erfindung

Die Erfindung betrifft ein Verfahren zur Herstellung von dünnen, anisotropen Schichten auf oberflächenstrukturierten Trägern.

Stand der Technik

Flüssigkristalline Substanzen lassen sich bekanntlich durch externe Kräfte richtungsabhängig und damit anisotrop orientieren (vgl. Ullmann's Encyclopädie der Techn. Chemie, 4. Auflage, Bd. 11, S. 658 - 671, Verlag Chemie, 1976). Als solch externe Kräfte wirken elektromagnetische Felder oder mechanische Kräfte, im allgemeinen Scherung oder Deformation. Zusätzlich lassen sich Oberflächeneffekte ausnützen, z.B. diejenigen, die auf uniaxial geriebenem Polyimid auftreten [vgl. de Jeu, Physical Properties of Liquid Crystalline Material, Chapter 2, pg. 16, J. Cognard Mol. Cryst. Liqu. Cryst. Supplement 1, pg. 1 (1982), J. M. Geary, J.W. Goodby, A.R. Kmets, J.S. Patel, J. Appl. Phys. 62, 4100 - 4108 (1987)].
Technisch werden derartige flüssigkristalline Systeme üblicherweise in Sandwich-Konfiguration für die Displayfertigung angewendet (vgl. Kelker-Hatz, Handbook of Liquid Crystals, Chapter 14, pg. 611, Verlag Chemie 1980). Mit solchen Displayzellen lassen sich makroskopisch orientierte Flüssigkristall-Domänen erhalten, wie sie für digitale optische Anzeigeninstrumente etc. verwendet werden.
Die Schichtdicken liegen zwischen 5 - 50 um, sie werden durch sogenannte Abstandshalter eingestellt. Die Befüllung der Zellen erfolgt üblicherweise durch Ausnutzung der Kapillarkraft.

Zur Herstellung von **orientierten** flüssigkristallinen Polymeren hat man sich bisher im allgemeinen der Display-Methode bedient (vgl. GB-A 2 146 787; GB-A 2 193 338).
Die Größe der Displayzellen war zwangsläufig aufgrund der Viskosität und Fließeigenschaften von Polymeren auf maximal etwa 50 x 50 mm beschränkt. Die Befüllung der Zellen in Schichtdicken bis zu 25 µm mußte bei erhöhter Temperatur ($T_K$ + 5K) im Vakuum durchgeführt werden. Anschließend wurde dann unterhalb der Klärtemperatur ($T_K$) über mehrere Stunden bis Tage hinweg im Vakuum getempert, um eine durchgehende makroskopische Orientierung zu erhalten. Dieses Verfahren ist einerseits mit erheblichem Zeitaufwand und mit thermischer Belastung der flüssigkristallinen Polymeren verbunden, andererseits auf kleine Abmessungen der Displays beschränkt.

Aufgabe und Lösung

Es bestand daher die Aufgabe, Verfahren zur Herstellung orientierter Flüssigkristall-Polymerfilme zur Verfügung zu stellen, welche die oben genannten Nachteile vermeiden, insbesondere ohne einen erhöhten apparativen Aufwand treiben zu müssen.

Es wurde nun gefunden, daß diese Aufgabe durch das Verfahren der vorliegenden Erfindung in besonders einfacher und technisch befriedigender Weise gelöst werden kann.

Die Erfindung betrifft ein Verfahren zur Herstellung dünner anisotroper Schichten, gebildet aus flüssigkristallinen Substanzen, wobei die flüssigkristallinen Substanzen FKS in dünner Schicht einseitig auf einem Träger T mit in der Weise vorstrukturierter Oberfläche, daß eine die Ausrichtung bestimmende Vorzugsrichtung der Struktur gegeben ist, aufgebracht werden.
Die einseitige Aufbringung bedeutet in der Praxis, daß das Prinzip des Einbringens in den geschlossenen Raum einer Zelle verlassen werden kann.

Die flüssigkristallinen Substanzen FKS sind ausgewählt aus der Gruppe, bestehend aus

a) flüssigkristallinen Hauptkettenpolymeren,

b) flüssigkristallinen Seitenkettenpolymeren,

c) flüssigkristallinen Monomeren und sonstigen flüssigkristallinen niedermolekularen Verbindungen, gegebenenfalls in Verbindung mit einem die dünne Schicht stabilisierenden Material.

Herstellung und Eigenschaften der flüssigkristallinen Substanzen sind an sich bekannt:

Zu a):

flüssigkristalline Hauptkettenpolymere (FKS-H), vgl. M.G. Dobb, J.E. McIntyre in Advances in Polymer Sciences 60/61, Liquid Crystal Polymers pg. 61 - 98, Springer Verlag 1984; DE-A 3 603 266; A. Griffin, J.F: Johnsen Liquid Crystals and Ordered Fluids Vol. 4, Plenum Press, New York 1984. Die flüssigkristallinen Hauptkettenpolymeren FKS-H gehorchen i.a. dem Prinzip, daß die Ketten aus relativ starren, mesogenen Gruppen und flexiblen Spacergruppen aufgebaut sind. Dabei werden sich im allgemeinen die starren und

flexiblen Gruppen entlang der Kette regelmäßig abwechseln.

Der Verknüpfungsmechanismus ist überwiegend der der Polykondensation. So gehören die flüssigkristallinen Hauptkettenpolymeren vorzugsweise den folgenden Polymerklassen an:

α) Typ Polyester

β) Typ Polyesteramid

γ) Typ Polysiloxan

[Vgl. I. Watanabe, W.R. Kriegbaum J. Polym. Sci, Polym. Phys. Ed. 23, 565 - 574 (1985); A. Blumstein Polym. J. 17, 277 - 288 (1985); S. B. Clough, A. Blumstein, E.C. Hso Macromolecules 9, 123 - 127 (1976); C. Noel, F.L. Laupretre, C. Friedrich, B. Fayolle, L. Bosio; Polymer 25, 808 - 814 (1984); R.W. Lenz; Polym. J. 17, 105 - 155 (1985)].

Die Durchführung der Polykondensation geschieht in an sich bekannter Weise. Im allgemeinen liegen die Molgewichte der Polykondensate im Bereich von 1 000 bis 20 000.

(Bestimmung erfolgt durch Gelpermeationschromatographie). Die Glastemperatur ($T_g$) der erfindungsgemäß verwendeten, flüssigkristallinen Polymeren liegt im allgemeinen im Bereich zwischen -40 Grad C und 110 Grad C. (Zur Glastemperatur $T_g$ vgl. I. Brandrup and E.H. Immergut, Polymer Handbook, 2nd Ed. 111 - 139, J. Wiley, 1975).

Zu b):

Flüssigkristalline Seitenkettenpolymere (FKS-S) (Vgl. H. Finkelmann, G. Rehage in Advances in Polymer Science 60/61, Liquid Crystal Polymers II/III, pg. 99 -172, Springer-Verlag 1984, DE-A 36 03 267).

Die erfindungsgemäß zu verwendenden flüssigkristallinen Seitenkettenpolymeren FKS-S bestehen ganz oder teilweise aus repetierenden Einheiten, die schematisch durch die Formel I

$$-[\,A - \underset{\displaystyle X - Y}{\underset{|}{B}}\,]- \qquad (I)$$

wiedergegeben werden können, wobei A - B die Elemente der Hauptkette des Polymerisats, X eine abstandhaltende Einheit ("Spacer") und Y eine mesogene Seitenkette bezeichnen. Von besonderem Interesse sind Seitenketten vom smektischem und vom nematischen Typ.

Die Element A - B entsprechen dabei vorzugsweise radikalisch polymerisierbaren Einheiten $A' - B'$ - (entsprechendes Monomeres: $A' = B' - X - Y$). Bevorzugt handelt es sich bei den Einheiten $A' - B'$ um Vinylgruppen, wie sie in den radikalisch polymerisierbaren Vinylverbindungen vorliegen, zum Beispiel um Einheiten

$$H_2C = \overset{\displaystyle R}{\overset{|}{C}} - Q -$$

worin $R_1$ für Wasserstoff oder Methyl und Q für eine die Doppelbindung aktivierende Funktion wie die Gruppe

$$-\overset{\displaystyle O}{\overset{\|}{C}}-O-;\ -\overset{\displaystyle O}{\overset{\|}{C}}-\overset{\displaystyle R_2}{\overset{|}{N}}-;\ -\overset{\displaystyle O}{\overset{\|}{C}}-;\ -C_6H_4-$$

steht, worin $R_2$ die Bedeutung Wasserstoff oder Alkyl mit 1 bis 6 Kohlenstoffatomen besitzt.

Die Spacergruppe X stellt eine (flexible) Kette mit 1 - 14 Kettengliedern dar, vorzugsweise eine Alkylengruppe $-(CH_2)_n-$ worin n für 1 bis 14 steht, wobei gegebenenfalls einzelne Kettenglieder substituiert sein können, beispielsweise durch Halogen wie Chlor oder durch eine Ätherbrücke ersetzt sein können.

Die mesogene Seitenkette Y enthält gegebenenfalls eine die Spacergruppe X mit der eigentlichen mesogenen Gruppe M verknüpfende Funktion VF wie z.B. eine

$$-O-;\ -\overset{\displaystyle O}{\overset{\|}{C}}-O-;\ -\overset{\displaystyle O}{\overset{\|}{C}}-\underset{\displaystyle R_2}{\underset{|}{N}}-;\ -O-\overset{\displaystyle O}{\overset{\|}{C}}-;\ \text{oder}\ -\underset{\displaystyle R_2}{\underset{|}{N}}-\overset{\displaystyle O}{\overset{\|}{C}}-$$

Gruppe.

Eine Aufstellung geeigneter mesogener Gruppen findet sich in Kelker and Hatz, Handbook of Liquid Crystals, Verlag Chemie 1980, loc.cit. pp. 67 - 113.

Zu c):

Flüssigkristalline Monomere FKS-M

Als flüssigkristalline Monomere kommen z.B. die unter b) angegebenen Monomeren infrage, beispielsweise

Acrylate (mono- und bifunktionelle) mit Spacerlänge n = 5, n = 6, wobei die mesogene Struktur vorzugsweise ein Phenylbenzoat oder ein Hydrochinondibenzoat sein kann Weiter sind von Interesse Azobenzole, Biphenyle 1-4-Bis-[Benzoyloxy]-Cyclohexane, Stilbene, Terephthalate, Schiff'sche Basen, Azoxybenzole.

Vorteilhafterweise enthalten die flüssigkristallinen Substanzen FKS mindestens ein chromophores Element. Unter einem chromophoren Element im Sinne der vorliegenden Erfindung sei ein solches verstanden, das bei mindestens einer Wellenlänge im Wellenlängenbereich von 300 bis 1 000, vorzugsweise bis 700 nm eine Absorption von >10 % besitzt. (Bestimmung nach H. Blume, H. Güsten in Ultraviolette Strahlen, Hrsg. J. Kiefer, De Gruyter Verlag Berlin 1977, S. 311 - 319).

Die chromophoren Element können homöopolar an die flüssigkristallinen Substanzen gebunden sein, sie können aber auch in Mischungen vorliegen. Hervorzuheben ist der Fall, in dem die chromophoren Elemente Bestandteile des flüssigkristallinen Polymeren darstellen, speziell der Fall, in dem chromophore Elemente aufweisende Monomere in den Polymeren enthalten sind. Polymere, die chromophore Elemente enthalten, sind beispielsweise aus der DE-A 3 027 571 und der EP-B 0 090 282 bekannt. Farbgebende Substanzen für niedermolekulare Flüssigkristalle oder Flüssigkristallmischungen können z.B. den DE-A 26 27 215, 26 40 824, 29 02 177, 30 34 249, 20 14 933 sowie den Literaturstellen H. Ringsdorf et al. Makromol. Chem. 1988, 1355 (1987), M. Eich, H. J. Wendorff, Makromol. Chem. Rapid Commun. 8, 467 (1987), R.J. Cox in Mol. Cryst. Liq. Cryst. 55, 1 - 32 (1979) und G.W. Gray in Chimia 34, 47 (1980), entnommen werden.

Herstellungmethoden für mesogene Gruppen tragende Polymere werden in der DE-A 28 31 909 angegeben.

Zu dem stabilisierenden Material

Das stabilisierende Material tritt als verbindende Phase zwischen den flüssigkristallinen Substanzen FKS auf und besitzt demgemäß eine gewisse Mindestviskosität von > $10^4$ Pa.s und bildet Filme bzw. trägt zur Filmbildung bei. Es handelt sich in der Regel um Polymere, wie sie zur Verdickung eingesetzt werden, beispielsweise ausgewählt aus der Gruppe der Acrylate, Polyvinylalkohole, Polyvinylacetale, Ethylen-Vinylacetat-Copolymere.

Wie bereits ausgeführt, kommen auch Mischungen von flüssigkristallinen Substanzen FKS infrage, z.B. bifunktionelle Acrylate mit der mesogenen Einheit Hydrochinondibenzoat, die mit verschiedenen Spacerlängen (z.B. 5 und 6) abgemischt wurden. Desgleichen Hydrochinondibenzoate mit bifunktionellen Bisphenol-O-Derivaten (O-100 % an der Dibenzoatkomponente). Bifunktionelle Hydrochinondibenzoate mit monofunktionellen flüssigkristallinen Acrylaten (im Mischungsverhältnis 50 : 50) mit folgenden, mesogenen Gruppen: p-Methoxyphenylbenzoat, Biphenylbenzoat, 1-Propyl-4-phenyl-cylohexylphenylbenzoat, Mischungen aus niedermolekularen flüssigkristallinen Substanzen und flüssigkristallinen Seitenkettenpolymeren, wie z.B. das Produkt ZLi 1114 (Merck AG) und Poly-p-acryloyloxypentyloxy-cyanabiphenyl (Mw 5 - 10 000 g/mol).

Durchführung des Verfahrens

Unter einer "dünnen Schicht" sei eine solche verstanden, die im Hinblick auf die technische Anwendung (s. "Vorteilhafte Wirkungen") z.B. auf dem Gebiet der Datenspeicherung allgemein, insbesondere der Holographie, der integrierten Optik, als optische Komponenten, die im allgemeinen vorgegebenen Anforderungsprofile erfüllt. In der Regel weist die "dünne Schicht" eine Schichtdicke im Bereich von 0,1 - 5 µm, vorzugsweise 0,3 - 4 µm auf, jedoch können Abweichungen nach unten oder oben vorkommen.

Bei einer Ausführungsart der Erfindung werden die flüssigkristallinen Substanzen FKS aus der flüssigen Phase aufgebracht. Als Lösungsmittel können insbesondere solche inerten Lösungsmittel eingesetzt werden, die eine gleichmäßige homogene Beschichtung des Trägers gewährleisten. Im allgemeinen liegt deren Siedepunkt nicht wesentlich über 100 Grad C und vorwiegend über 50 Grad C. Genannt seien z.B. halogenierte Kohlenwasserstoffe wie Methylenchlorid, Perchlorethylen, aromatische Kohlenwasserstoffe wie z.b. Toluol, Alkohole, wie z.B. Isopropanol, insbesondere im Gemisch mit Toluol, Ketone, wie z.B. Aceton, Methylethylketon, Methylisobutylketon, Äther wie Tetrahydrofuran, Ester wie Ethylacetat. In einzelnen Fällen kann auch die Anwendung von Dimethylformamid (Kp. 152 Grad C) und Cyclohexanon (Kp. 153 - 156 Grad C) angezeigt sein.

Im allgemeinen werden die flüssigkristallinen Substanzen FKS aus relativ konzentrierten Lösungen, (z.B. 10 - 25 Gew.-%) aufgebracht. Alternativ kann die Beschichtung auch mit den flüssigkristallinen Substanzen selbst vorgenommen werden, sofern sie sich dafür eignen. Als eine Faustregel kann gelten, daß Beschichtungen mit Substanzen FKS mit einer Viskosität $\eta$ im Bereich 100 - $10^4$ cp (Bestimmung nach DIN-Taschenbuch No. 18, "Materialprüfnorm für Kunststoffe, Kautschuk und Gummi) direkt durchgeführt werden können.

Für die Beschichtung können an für sich bekannte Beschichtungsverfahren wie Tauch-, Zieh-, Spin-Beschichtung und abgeänderte Verfahren, wie z.B. Rakel-Beschichtung verwendet werden. (Literatur: Oberflächen-und Dünnschicht-Technologie, Bd. 1; Beschichtung von Oberflächen, Hrsg. R. Haefer, Springer-Verlag, Berlin 1987, pp. 262 - 271).

Bei Auftrag im Ziehverfahren haben sich Ziehgeschwindigkeiten im Bereich 10 - 200 cm/min bewährt. Bei Anwendung des Spin-Coating soll die Drehzahl als Anhalt im Bereich 500 - 3 000 U/min liegen. Bei Einhaltung zweckmäßiger Parameter können die Schichtdicken gezielt in den gewünschten Bereichen, d.h. vorwiegend im Bereich 0,1 bis 5 µm aufgebracht werden. Die vollständige Orientierung dieser Schichten ist dann gewährleistet. Im allgemeinen erfolgt die Orientierung unter Normalbedingungen, vorzugsweise im Temperaturbereich $T_K \pm 5°K$ ($T_K$ = Klärtemperatur) und ist innerhalb weniger Minuten abgeschlossen.

Die Dimensionen der Trägerplatten sind im allgemeinen nicht kritisch, d.h. die Flächenmaße wirken in der Regel nicht beschränkend, sofern strukturiertes Material vorliegt.

Das erfindungsgemäße Verfahren ermöglicht das Aufbringen mehrerer Schichten in Folge und anschließende Orientierung in gegebenenfalls unterschiedlichen Richtungen. Die Beschichtung der Träger T kann auf einer oder mehreren Oberflächen erfolgen. Aus unterschiedlichen Trägerplatten T können Laminate mit unterschiedlichen Vorzugsrichtungen aufgebaut werden. Desgleichen kann über der dünnen orientierten Schicht aus den Substanzen FKS eine transparente, im allgemeinen mit der Absorption der Substanzen FKS für elektromagnetische Strahlung, insbesondere Licht nicht bzw. nicht in störendem Umfang überlappende Deckschicht DS angeordnet sein. Alternativ können die flüssigkristallinen Substanzen bei entsprechender Eignung, insbesondere genügender thermischer Stabilität auch aufgeschmolzen werden, wobei die Arbeitstemperatur in der Regel 150 Grad C nicht überschreiten wird.

Das Trägermaterial T

Das Trägermaterial T wird in der Regel eine makroskopisch gesehen im wesentlichen ebene Fläche bilden, deren Dimensionen innerhalb der aus arbeitstechnischen Gründen vorgegebenen Maße variabel sind. Vorbedingungen für die Eignung als Trägermaterial T im Sinne der vorliegenden Erfindung ist, daß mindestens die für die Beschichtung vorgesehene Oberfläche derart vorstrukturiert ist, daß eine die Ausrichtung der Beschichtung bestimmende Vorzugsrichtung der Oberflächenstruktur vorliegt. Dabei kann die Oberfläche des Trägers T aus einer geeigneten, von der Masse des Trägers T verschiedenen Materialschicht bestehen. Diese Schicht kann z.B. ausgewählt sein aus der Gruppe, gebildet aus Polyimiden (vgl. K.L. Mittal in "Polyimides", Plenum Press, New York, 1984), Polyvinylakohol, Siliciumdioxid, Silanen. Im allgemeinen wird die Schicht mindestens so dick sein, daß sie für eine permanente Fixierung der aufgegebenen gerichteten Struktur ausreicht. In der Regel genügen dafür 0,01 is 0,1 µm; darüber hinausgehende Schichtdicken sind verständlicherweise ebenfalls geeignet.

Das Aufbringen der Materialschicht kann in an sich bekannter Weise, beispielsweise durch Spincoating mit Liquicoat ZLi 2650® der Fa. Merck AG, vorgenommen werden. Alternativ kann die für die Ausrichtung bestimmende Vorzugsrichtung durch entsprechende Oberflächengestaltung des Trägermaterials T selbst gegeben sein, d.h. Trägermaterial und polymeres Beschichtungsmaterial sind identisch. Als Trägermaterial T eignen sich somit:

- anorganisches Material wie Glas, Metall, Keramik, das in angegebener Weise beschichtet wird
- Verbundmaterial auf der angegebenen Grundlage z.B. verspiegelte Glasplatten, leitfähig beschichtete Glasplatten
- organische Polymere, wie z.B. PMMA, PC, PET, Nylon, deren Oberflächenstruktur während der Beschichtung erhalten bleibt.

Die Vorzugsrichtung wird im allgemeinen durch uniaxial verlaufende Deformationen der Oberfläche, die mikroskopisch z.B. die Gestalt von (parallelen) Furchen annehmen können, herbeigeführt. [Nicht in das erfindungsgemäße Handeln eingezogen sei eine einheitliche molekulare Orientierung der Oberflächenschicht, wie z.B. in semikristallinen und flüssigkristallinen Hauptkettenpolymeren. (Vgl. J.M. Geary et al. in J. Appl. Phys. 62, 4100 - 4108, 1987)].

Diese Deformationen z. B. in Gestalt von Furchen können in einfacher Weise mechanisch z.B. durch uniaxiales Reiben (Kratzen) der Oberfläche hervorgerufen werden. Die dafür geeigneten Werkzeuge enthalten in geeigneten Abständen Protuberanzen, die die erforderliche Strukturierung der Oberfläche hervorrufen können. Die Werkzeuge bzw. die Protuberanzen sollten stabil und hart genug sein, um die

gewünschten Deformationen der Oberfläche durch Reiben damit bewirken zu können. Es eignen sich beispielsweise Fasern, z.B Kohlefaserbürsten, Papier, Nadeln, gesputterte Oberflächen u.ä. Im allgemeinen besitzen die Deformationen (Furchen) eine Tiefe von ca. 1 bis 100 nm und verlaufen in Abständen von 1 bis 100 nm.

Als besonders überraschend ist zu werten, daß nur eine strukturierte Oberfläche ausreicht, um die gesamte flüssigkristalline Schicht zu orientieren.

Die folgenden Beispiele dienen zur Erläuterung der Erfindung:

## BEISPIELE

### Beispiel 1

Beschichtung von Glasplatten.

Als Glasplatten werden plane Platten mit den Abmessungen 70 x 70 bis 200 x 300 mm und der Stärke 1,1 - 0,85 mm verwendet, die polyimidbeschichtet und uniaxial strukturiert waren. Das zur Beschichtung verwendete Polymere ist ein Copolymerisat FKS-1 der Zusammensetzung:

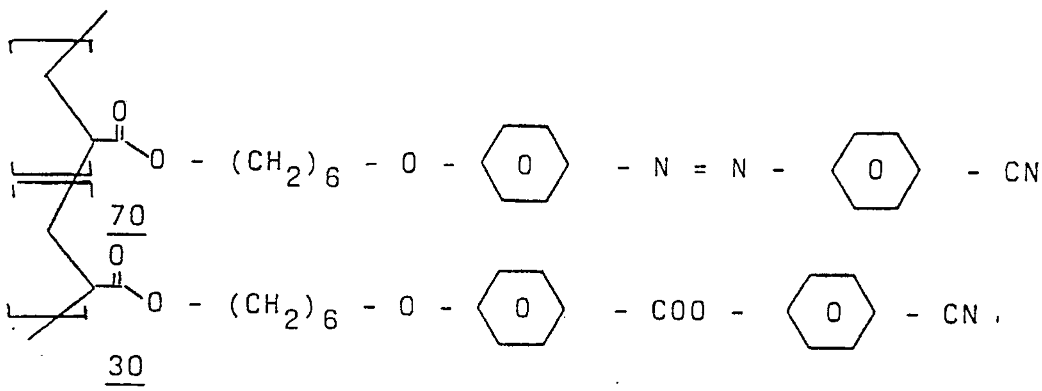

Mw = 6 100 - 6 500 g/mol

Verwendet werden Lösungen mit einem Gehalt an Copolymerisat FK-S1 von 5 - 25 Gew.-% in Methylenchlorid, stabilisiert mit 0,2 Gew.-% TINUVIN 770 der Ciba Geigy AG und 0,01 Gew.-% IRGANOX 1076. Nach dem Lösen wird 2 - 3 mal über ein 0,2 µm Teflonfilter (Fa. Nucleopor) bis zur Staubfreiheit filtriert und das Filtrat unter staubfreien Bedingungen mit einer Ziehgeschwindigkeit von 50 - 200 cm/min auf die Glasplatten aufgetragen.

Die Proben werden nach dem Beschichten direkt in einem Trockenschrank unter Normalbedingungen getrocknet. Die Orientierung erfolgt durch Tempern zwischen 105 Grad C und 95 Grad C bei einer Abkühlrate von ca. 2 K/min. Es entstehen transparente, vollständig homogen orientierte Filme mit einer Schichtdicke von 1,4 - 1,7 um. Die so erhaltenen Platten können z.B. für die Datenspeicherung, insbesondere die holographische Datenspeicherung verwendet werden.

Figur 1 gibt die UV-VIS-Absorptionsspektra der oben beschriebenen Probe wieder. Die Absorption wurde parallel und rechtwinklig zur Orientierungsrichtung der dünnen, orientierten Polymerschicht bestimmt, wobei $E_\parallel$ den Wert der Absorption parallel zur Orientierungsrichtung und $E_\perp$ den Wert rechtwinklig zur Orientierung darstellt. Der Orientierungsparameter S wurde nach der folgenden Formel

$$S = \frac{E_\parallel - E_\perp}{E_\parallel + 2E_\perp}$$

bestimmt und hatte den Wert S = 0,67.

Beispiel 2

Beschichtung von Glasplatten

Generell kann, wie in Beispiel 1 beschrieben verfahren werden. Als Polymerisat (FK-S2) wird das der folgenden Struktur eingesetzt.

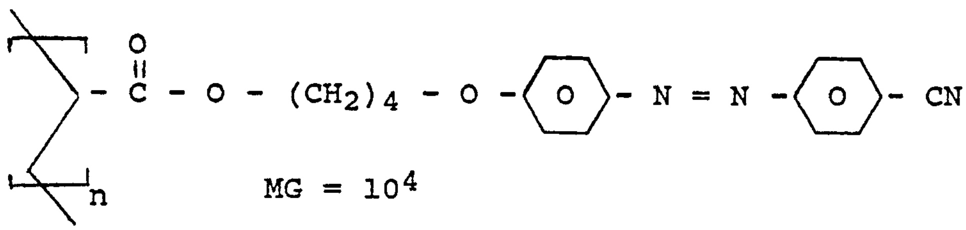

$MG = 10^4$

Das Polymerisat in einer 10 - 20 Gew.-%igen Methylenchlorid-Lösung wird in einer Lackschleuder mit V = 500 - 1 000 U/min aufgeschleudert (t = 1 min). Die Orientierung erfolgt zwischen 140 und 130 Grad C im Trockenschrank.

Man erhält transparente, tieforange gefärbte, homogen orientierte Filme mit einer Schichtdicke von 0,5 bis 1,5 um.

Auch diese Filme eignen sich für die Datenspeicherung, besonders für holographische Datenspeicherung.

Beispiel 3

Beschichtung von Glasplatten

Es kann wiederum in Analogie zu Beispiel 2 verfahren werden. Als Polymerisat (FK-S3) wird das der folgenden Struktur verwendet: (Mw = 30 000 bis 45 000)

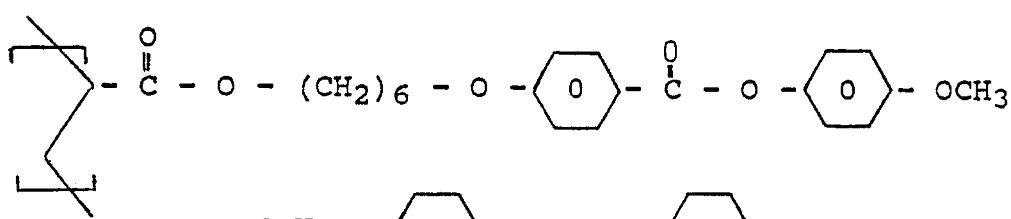

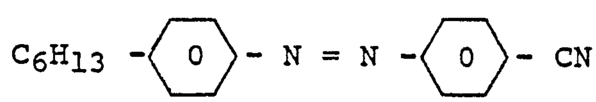

Eine 10 %ige Lösung des Polymeren in $CH_2Cl_2$ wird verwendet, die mit 3 % des Azofarbstoffs (bezogen auf das Gewicht des Polymeren) dotiert wurde. Die Orientierung erreicht man durch Tempern zwischen 100 und 90 Grad C .

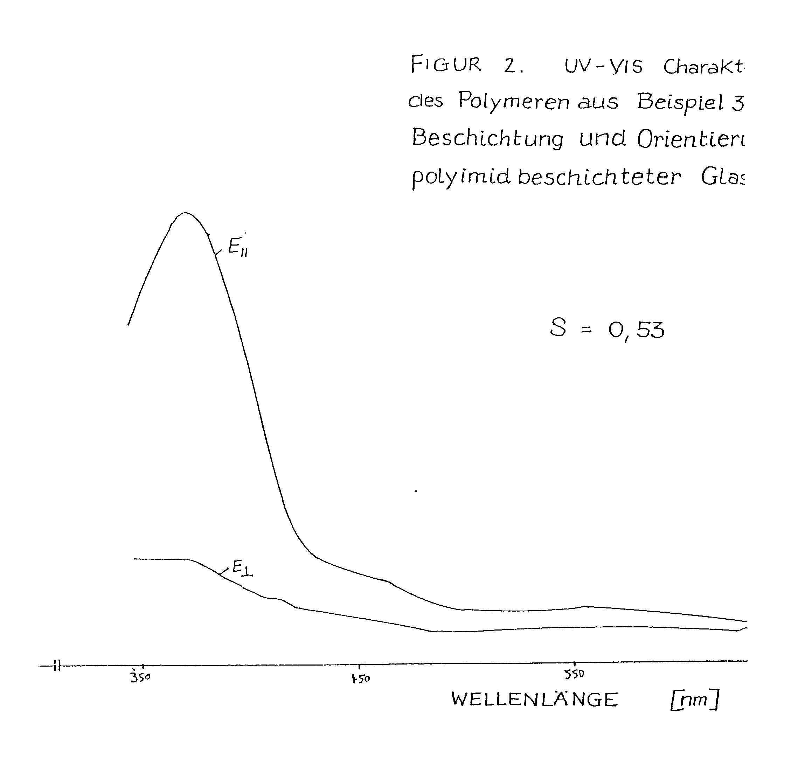

Die Figur 2 gibt die Absorption im UV-VIS-Spektrum wieder. Daraus wurde der Orientierungsparamater S nach der in Beispiel 1 angegebenen Formel zu S = 0,53 berechnet.

Beispiel 4

Angewendet wurde die Methode analog Beispiel 1. Zur Beschichtung dient das Polymer der folgenden Struktur (FK-S4) zusammen mit verschiedenen Azofarbstoffen im Gewichtsverhältnis 97 : 3.

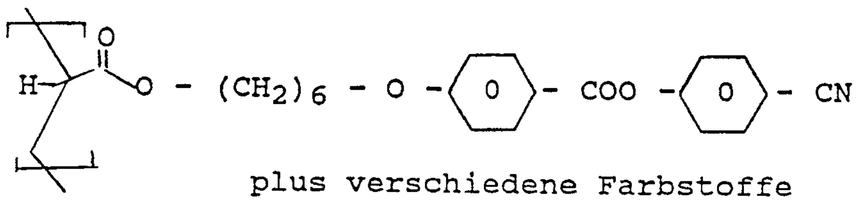

97 %

plus verschiedene Farbstoffe 3 %

Eine 5 %ige (Gew.) Lösung in Cyclopentanon wird verwendet. Die Orientierung erreicht man durch Tempern der Proben bei einer Temperatur $T_{orient}$, die in Tabelle 1 angegeben ist. Der Orientierungsparameter S wird wiederum gemäß Beispiel bei der Wellenlänge λ max bestimmt.

TABELLE 1

| Probe | Tn,i (Grad C) | Torient (Grad C) | S | λ max (nm) |
|---|---|---|---|---|
| 4.1 Farbstoff 1 | 112 | 106 | 0,34 | 530 |
| 4.2 Farbstoff 2 | 108 | 103 | 0,54 | 530 |
| 4.3 Farbstoff 3 | 74 | 70 | 0,49 | 515 |
| 4.4 Farbstoff 4 | 80 | 75 | 0,57 | 515 |
| 4.5 Farbstoff 5 | 113 | 106 | 0,43 | 535 |

Die Farbstoffe 1 - 5 entsprechen der folgenden Formel:

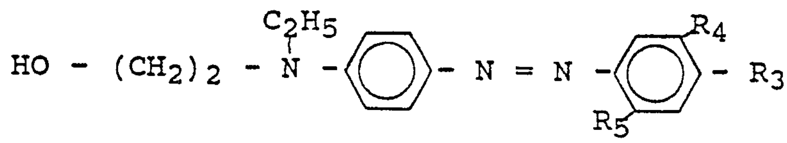

wobei

$R_3$ für eine Nitro-, Nitroso-, Chloro-, Trifluoromethyl- oder Cyanogruppe,

$R_4$ für Wasserstoff, eine Chloro- oder Cyanogruppe,

$R_5$ für Wasserstoff, eine Chloro- oder eine Carbonylalkylgruppe mit insgesamt 5 Kohlenstoffatomen oder eine Gruppe $-(X)_n-R_6$, worin X Sauerstoff oder einen Rest $-NR_7$ und $R_6$ und $R_7$ eine Alkylrest mit 1 bis 4 Kohlenstoffatomen und n null oder eins bedeuten,

steht.

## Ansprüche

1. Verfahren zur Herstellung von dünnen, anisotropen Schichten gebildet aus flüssigkristallinen Substanzen,
dadurch gekennzeichnet,
daß die flüssigkristallinen Substanzen FKS in dünner Schicht einseitig auf einem Träger T, mit in der Weise vorstrukturierter Oberfläche, daß eine die Ausrichtung bestimmende Vorzugsrichtung der Struktur gegeben ist, aufgebracht werden.

2. Verfahren gemäß Anspruch 1, dadurch gekennzeichnet, daß die flüssigkristallinen Substanzen FKS ausgewählt sind aus der Gruppe der flüssigkristallinen Hauptkettenpolymeren, der flüssigkristallinen Seitenkettenpolymeren, der flüssigkristallinen niedermolekularen Verbindungen, gegebenenfalls in Verbindung mit einem die dünne Schicht stabilisierenden Material, sowie Mischungen der gennanten Bestandteile.

3. Verfahren gemäß den Ansprüchen 1 und 2, dadurch gekennzeichnet, daß die flüssigkristallinen Substanzen FKS mindestens ein chromophores Element enthalten.

4. Verfahren gemäß Anspruch 1, dadurch gekennzeichnet, daß die dünne Schicht eine Dicke von 0,1 bis 5 µm besitzt.

5. Verfahren gemäß Anspruch 1, dadurch gekenzeichnet, daß die flüssigkristallinen Substanzen aus

einer flüssigen Phase aufgebracht werden.

6. Verfahren gemäß Anspruch 1, dadurch gekennzeichnet, daß die flüssigkristallinen Substanzen durch einen Aufschmelzschritt aufgebracht werden.

7. Verfahren gemäß Anspruch 1, dadurch gekennzeichnet, daß über der dünnen Schicht aus flüssigkristallinen Substanzen eine transparente, nicht mit der Absorption der Substanzen FKS überlappende Deckschicht DS angeordnet ist.

8. Verfahren gemäß den Ansprüchen 1 bis 7, dadurch gekennzeichnet, daß das Trägermaterial T die die Ausrichtung bestimmende Verzugsrichtung unmittelbar an der Oberfläche des Trägers T trägt.

9. Verfahren gemäß den Ansprüchen 1 bis 7, dadurch gekennzeichnet, daß die vorstrukturierte Oberfläche des Trägers aus einem von der Hauptmasse des Trägers verschiedenem, spezifisch geeigneten Material besteht.

10. Verfahren gemäß Anspruch 9, dadurch gekennzeichnet, daß das von der Hauptmasse des Trägers verschiedene, die Oberfläche bildenden Material ausgewählt ist aus der Gruppe der Polyimide, Polyvinylalkohole, Polyethylenterepthalate, Nylon 66, Siliciumdioxid, Alkylsilane.

11. Verfahren gemäß Anspruch 8, dadurch gekennzeichnet, daß das Trägermaterial und das polymere Beschichtungsmaterial identisch sind.

12. Verfahren gemäß Anspruch 9, dadurch gekennzeichnet, daß man auf der Oberfläche uniaxial verlaufende Deformationen anbringt.

13. Verfahren gemäß Anspruch 12, dadurch gekennzeichnet, daß die uniaxial verlaufende Deformation mechanisch hervorgerufen wird.

14. Verfahren gemäß Anspruch 13, dadurch gekennzeichnet, daß die uniaxial verlaufende Deformation durch Reiben hervorgerufen wird.

15. Verfahren gemäß den Ansprüchen 13 bis 14, dadurch gekennzeichnet, daß man Werkzeuge benutzt, die in den erforderlichen Abmessungen strukturgenerierende Protuberanzen besitzen, die Deformation hervorrufen.

16. Verfahren gemäß den Ansprüchen 13 bis 15, dadurch gekennzeichnet, daß man als Werkzeug Fasern, Papier, Nadeln, gesputterte Oberflächen, einsetzt.

17. Verfahren gemäß Anspruch 13, dadurch gekennzeichnet, daß das Trägermaterial einen photostrukturierbaren Träger einschließt und daß die Deformationen durch hohe energetische Strahlung herbeigeführt wird.

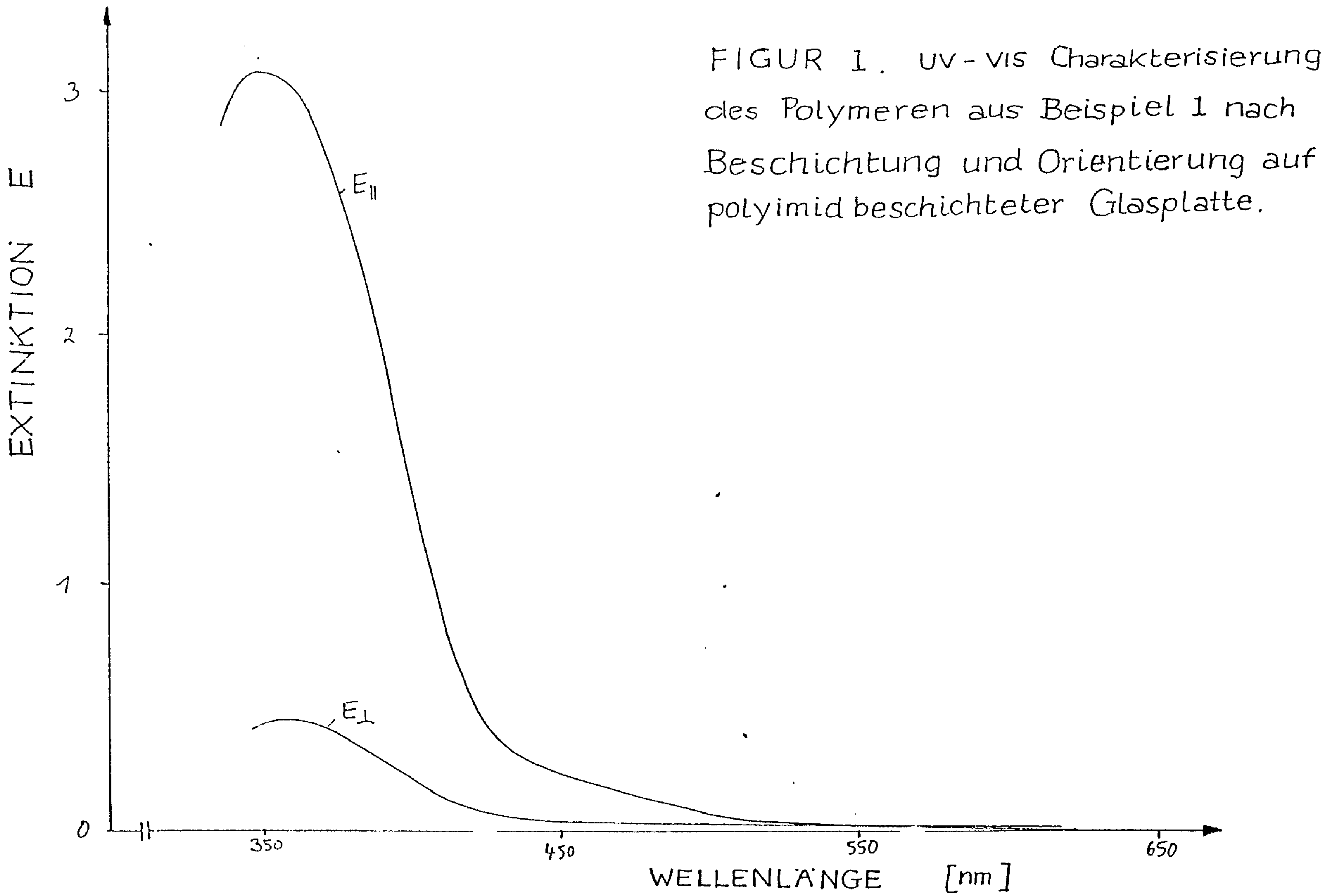


FIGUR 1. UV-vis Charakterisierung des Polymeren aus Beispiel 1 nach Beschichtung und Orientierung auf polyimid beschichteter Glasplatte.

FIGUR 2. UV-VIS Charakt
des Polymeren aus Beispiel 3
Beschichtung und Orientieri
polyimid beschichteter Glas